# EUROPEAN PATENT SPECIFICATION

(11) **EP 0 823 577 B1**
(45) Date of publication and mention of the grant of the patent: **08.10.2003**
(21) Application number: 97305933.0
(22) Date of filing: 05.08.1997
(51) Int. Cl.: F16K 24/04, F16K 17/36, B60K 15/035

(54) **Vent valve having multi-piece valve housing**
Entlüftungsventil mit mehrteiligem Gehäuse
Soupape de purge à pièces multiples

(30) Priority: 07.08.1996 US 684978; 20.06.1997 JP 88019297
(43) Date of publication of application: 11.02.1998
(73) Proprietor: BorgWarner, Inc., Auburn Hills, MI 48236-1782 (US)
(72) Inventor: Weissinger, Peter G., Sterling Heights, Mi 48312 (US); Rosas, Manuel D., Coleta, Illinois 61017 (US)
(74) Representative: Lerwill, John

(56) References cited:
- WO-A-96/04089
- AU-B- 473 199
- FR-A- 2 308 040
- FR-A- 2 658 899
- GB-A- 2 066 423
- GB-A- 2 140 888
- US-A- 2 027 803
- US-A- 5 413 137

## Description

This invention relates to a coupling mechanism for attaching one member to another member and, optionally, to a valve having a multi-piece valve housing that includes such a coupling mechanism for attaching one housing member to another housing member.

Coupling mechanisms for attaching one member to another are already known for various constructions. See for instance: US-A-1,812,583 to Cavalieri; US-A-2,027,803 to Young; US-A-2,781,148 to Reddle; US-A-4,313,649 to Morikawa et al; US-A-5,251,776 to Morgan, Jr. et al; and US-A-5,397,196 to Boiret et al which disclose coupling mechanisms of the so called bayonet slot type in various applications.

Valves having multi-piece valve housings are also known but none are known that use coupling mechanisms of the bayonet slot or quick disconnect type.

US-A-5,413,137 granted to David R. Gimby May 9, 1995 discloses a fuel vapor vent assembly that has a multi-piece valve housing. The housing includes a body member that has an integral cap member. The housing also includes an insert and a spring seat. The insert is press fitted into the upper end of the body member to provide an orifice for fuel vapors to escape from the fuel tank and a liquid trap basin above the orifice for catching any liquid fuel entrained in the fuel vapors that exit the fuel tank through the orifice. The spring seat has hooks that are snap fit into apertures of the body member for retention. The fuel tank and the valve member are made of a high density polyethylene (HDPE), a material that is known for high strength, weldability and resistance to gasoline fuel. This insert is preferably made of acetal copolymer that is highly resistant to fuel permeation and therefore does not grow when immersed in gasoline.

US-A-5,522,417 granted to Kazuyki Tomoika and Atsushi Takahashi June 4, 1996 discloses an anti-spilling valve for a vehicle fuel tank that has a multi-piece valve housing. The housing includes a valve chamber, a mounting member and a valve seat ring. The valve chamber which is immersed in gasoline is advantageously formed of polyacetal resin to minimise growth while the mounting member is advantageously made of high density polyethylene resin (HDPE) for weldability to the fuel tank which is commonly made of this material. The three parts are fabricated and assembled by molding the mounting member of HDPE resin over the upper end of a pre-molded valve chamber formed of polyacetal resin. The valve seat ring is then fixed to the valve chamber by ultrasonic welding.

WO 96/04089, which forms the basis for the precharacterising clause of the main clam, discloses a mechanism for coupling together two members, the one member having a key-way which has an open end and a closed end, and the other member having a retention lug which is engageable with the closed end of the key-way. A resilient locking element is also provided on the member having the key-way, at least a portion of an end of which is resiliently and selectively engageable with a wall portion of the open end of the key-way so as to secure the two members relative to each other along radial, axial and tangential planes and to prevent relative rotation therebetween.

In one aspect, the object of this invention is to provide a coupling mechanism that is easily engaged by sliding one member into another member axially, and then twisting one member relative to the other member to retain the members together in a locked engagement that cannot be released without manual manipulation.

As an option, the object of this invention is to provide a valve that has a multi-piece valve housing that has such a coupling mechanism for attaching one valve housing member to another valve housing member.

In another optional aspect, the object of this invention is to provide a valve for insertion into a gasoline fuel tank that has a multi-piece valve housing that includes members configured for advantageous use of different materials and/or advantageous incorporation of a coupling mechanism for securely coupling the members together easily.

In still another aspect, the objection of this invention is to provide a multi-piece that incorporates a snag-proof coupling mechanism for attaching two members of the multi-piece assembly pieces to each other.

According to the present invention there is provided a coupling mechanism for acting upon two members in a redial, an axial, and a tangential plane, the first member being cooperatively engageable upon the second member and having a key-way that has an axial portion with an open end and a circumferential portion which extends from the axial portion in a rotational direction to a closed end; the mechanism including a retention lug and a resilient locking element which are cooperatively engageable with the key-way, the retention lug being engageable with the closed end of the key-way and at least a portion of an end of the resilient locking element being resiliently and selectively engageable with a wall portion of the open end of the key -way to secure the first member relative to the second member along radial, axial, and tangential planes and to prevent rotation of the first member relative to the second member in either rotational direction, the retention lug being formed on the second member; characterized in that the resilient locking element formed as part of the second member is formed as a finger extending in the opposite rotational direction, is bendable in the axial direction and operatively engageable in the open end of the axial portion of the key-way so that the axial face of the said free end portion of the resilient locking finger prevents relative rotation of the two members in the opposite rotational direction, and in that the retention lug, after having passed the axial portion of the key-way, is operatively engageable with the closed end formed in the circumferential portion of the key-way, which circumferential portion extends from the axial portion of the key-way in the rotational direction so as to prevent relative rotation of the two members in the rotational direction.

In order that the invention may be well understood, there will now be described an embodiment thereof, given by way of example, reference being made to the accompanying drawings, in which:
Figure 1 is an exploded perspective view of a fuel vapor vent valve having a multi-piece housing that includes a coupling mechanism which does not form part of the present invention;
Figure 2 is a section taken substantially along the line 2-2 of figure 1 looking in the direction of the arrows;
Figure 3 is a section taken substantially along the line 3-3 of figure 1 looking in the direction of the arrows;
Figure 4 is a section taken substantially along the line 4-4 of figure 1 looking in the direction of the arrows;
Figure 5 is an exploded perspective view of a modification of the fuel vapor vent valve shown in figure 1-4;
Figure 6 is a perspective view of another fuel vapor vent valve having a multi-piece housing that includes a valve coupling mechanism according to the present invention;
Figure 7 is a detailed section taken substantially along the line 7-7 of figure 6 looking in the direction of the arrows;
Figure 8 is an exploded perspective view of the fuel vapor vent valve of Figure 6;
Figure 9 is an enlarged fragmentary view of the valve coupling mechanism of Figure 6; and
Figure 10 is a perspective view of a modification of the fuel vapor vent valve shown in figures 6-9.

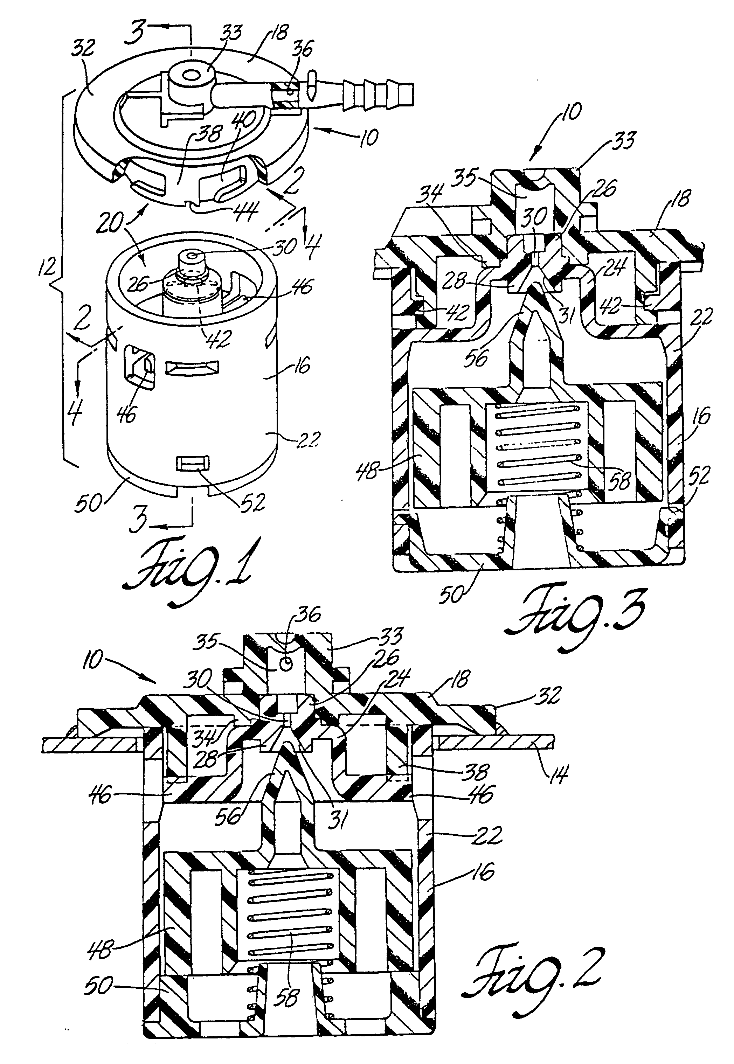

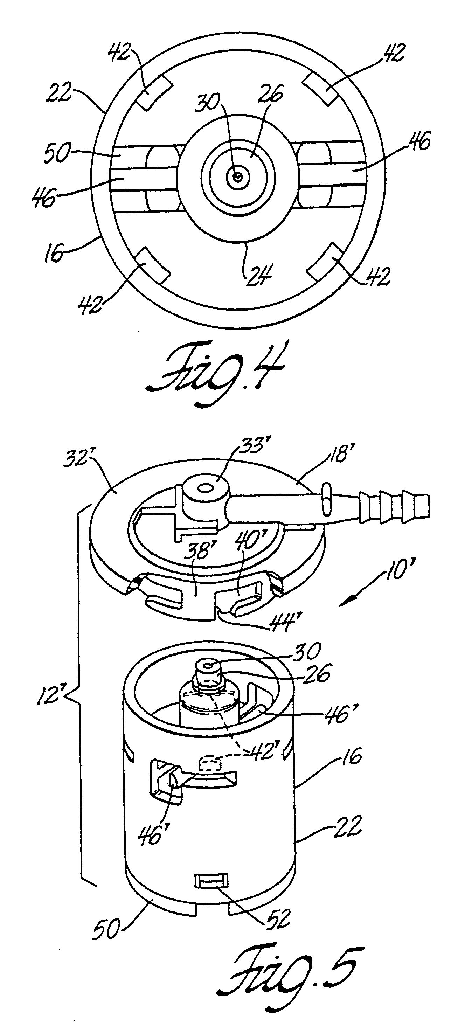

Referring now to the drawing and more particularly to figures 1,2, 3 and 4, a fuel vapor vent assembly 10, which does not form part of the present invention comprises a multi-part valve housing 12 of molded plastic construction for insertion into a fuel tank 14 through an opening through a wall of the tank as best shown in figure 2. Housing 12 comprises a valve member 16 and a cap member 18 that are attached together by a coupling arrangement indicated generally at 20. Valve member 16 is preferably molded of a material that is highly resistant to gasoline fuel permeation and experiences little or no growth when immersed in gasoline, such as acetyl resins and copolymers. On the other hand, cap member 18 is preferably molded of material that is readily weldable to gasoline tanks such as high density polyethylene (HDPE).

Structurally, valve member 16 has a cylindrical wall 22 that has an outer diameter that is somewhat smaller that the diameter of the opening through the wall of the fuel tank 14 so that the valve member 16 can be inserted into the fuel tank 14 through the opening easily. Valve member 16 has a hat shaped top wall 24 that supports a vertical tube 25 that defines upper and lower aligned collars 26 and 28 and a vertical passage 30 through the top. Passage 30 includes an upper liquid catch basin in upper collar 26, a central orifice and a lower valve seat 31 in lower collar 28.

Cap member 18 has a flange 32 that has an outer diameter that is considerably larger than the diameter of the opening through the wall of the fuel tank 14. Thus flange 32 is adapted to be attached to an exterior surface of the wall of the fuel tank 14 when valve member 16 is inserted into the fuel tank. Cap member 18 is preferably welded to the top of fuel tank 14 as indicated in figure 2.

Cap member 18 includes upper and lower collars 33 and 34 that define a seat for upper collar 26 of valve member 16, a vapor cavity 35 above the liquid catch basin in upper collar 26, and a traverse exit passage 36 that extends through an exit pipe above flange 32.

Upper collar 26 of valve member 16 and lower collar 34 of cap member 18 form a sealed passage from the valve seat 31 to the outboard end of the exit pipe when the upper collar 26 of valve member 16 is seated in the lower collar 34 of cap member 18 by coupling the valve and cap members 16 and 18 together.

The means for coupling cap member 16 to valve member 18 includes a depending skirt 38 of cap member 16 that is sized for insertion into the upper end portion of the cylindrical wall 22. The outer wall of skirt 38 includes a plurality of circumferentially spaced key-ways 40. Key-ways 40 are generally L-shaped and have an axial open-ended leg that leads to a circumferential close-ended circumferential leg. Valve member 18 has a corresponding number of circumferentially spaced lugs 42 on the inner surface of cylindrical wall 22 that protrude radially inwardly. Lugs 42 enter key ways 40 via the entrances of the open ended axial legs when skirt 38 is inserted into cylindrical wall 22 and engage the circumferential legs in a coupling position when valve member 18 is then rotated in a clockwise direction with respect to cap member 16. Lugs 42 preferably engage the closed ends of the circumferential legs in the coupling position.

The cap member 16 and the valve member 18 also include means for retaining lugs 42 in the coupling position comprising a plurality of circumferentially spaced notches 44 in the bottom of skirt 38 and two resilient lock fingers 46 of the valve member 16 that engage two of the circumferentially spaced notches 44 when the lugs 42 are in the coupling position. Lock fingers 46 are attached to the hat-shaped top wall 24 at one end and extend radially outwardly in cantilever fashion. Radial lock fingers 46 preferably terminate at the inner surface of cylindrical wall 22 to facilitate molding valve member 18 and so that the radial lock fingers 46 do not protrude outwardly of the cylindrical wall 22 and cause snagging problems. Cylindrical wall 22 has four circumferentially spaced slots in the upper portion to facilitate molding of lugs 42 and two diametrically opposed rectangular windows that facilitate molding of the radial lock fingers 46. The rectangular windows also provide access for depressing the ends of the lock fingers 46 and releasing the lock fingers 46 from the notches 44.

Lock fingers 46 are preferably relaxed and substantially unstressed when engaged in notches 44. Two lock fingers are also preferably used as a safety to prevent inadvertent uncoupling of the valve and cap members 16 and 18 because both lock fingers 46 must be depressed simultaneously to initiate release and uncoupling. For a more permanent attachment several lock fingers can be used as the difficulty of initiating release increases with the addition of each locking finger. On the other hand, a single locking finger may be preferred where frequent uncoupling is necessary.

A float 48 is disposed inside valve member 18 and retained by a seat 50 that is attached to the bottom of wall 22 by outwardly projecting hooks 52 that snap fit into in slots 54 in the bottom portion of wall 22. Float 48 includes a hollow stern shaped valve 56 that cooperates with the lower valve seat 31 of valve member 16. Float 48 rests on a coil spring 58 that is supported by seat 50. Vent valve 12 is normally open to vent fuel vapors in fuel tank 14 to a vapor storage device such as a charcoal canister (not shown). However, the vent valve 12 is closed by float 48 to prevent liquid fuel flow through passage 30 when the fuel tank 14 is tilted, inverted or full of fuel.

Figure 5 illustrates a modified vent valve 10' having a multi-part valve housing 12' wherein the lock fingers 46' of the valve member 16' are repositioned in the circumferential direction and the notches 44' of the cap member 18' are repositioned in the skirt 38' to coincide with the entrance portion of the L-shaped slots 40'. Vent valve 12' is otherwise the same as vent valve 12 and corresponding parts are identified with the same numerals. In modified vent valve 12'; each of the resilient lock fingers 46' engage a wall portion at the open-end of a key-way 40' to secure the members in the locking position where each of the lugs 42 engage a wall at the closed end of the key-way.

Figure 6 discloses a vent valve having a multi-piece housing that embodies the valve coupling mechanism according to the present invention indicated generally at 110. In this embodiment the outer diameter of the skirt of the cap or fitting member 120 is the same as the outer diameter of the cylindrical wall of the valve or body member 140. In this case valve member 140 includes an upper neck portion 142 onto which the skirt of the cap member 120 fits for coupling. The valve coupling mechanism 110 includes retention means 114 comprising rectangular-shaped radial lugs 144 disposed relative to the valve member 140, and L-shaped or bayonet slotted key-ways 124 disposed relative to the fitting.

The valve coupling mechanism 110 also includes resilient locking elements 146 that cooperatively engage with the corresponding key-ways 124. The resilient locking elements 146 of the second embodiment are preferably disposed on the valve member 140 with the radial lugs 144.

Each resilient locking element 146 is preferably in the shape of a protruding finger, and extends above the neck 142 of the valve member 140. The valve member 140 also includes a recess 148 into which the resilient locking element 146 is compressed while the cap member 120 is being mounted onto and released from the valve member 140. The recesses 148 are preferably arcuate and similar in shape to the resilient locking elements 146, so that the valve member 140 complete with finger and recess 148 can be formed from a single piece. Each resilient locking element 146 is relaxed during engagement, and stressed while the cap member 120 is being mounted onto and released from the valve member 140.

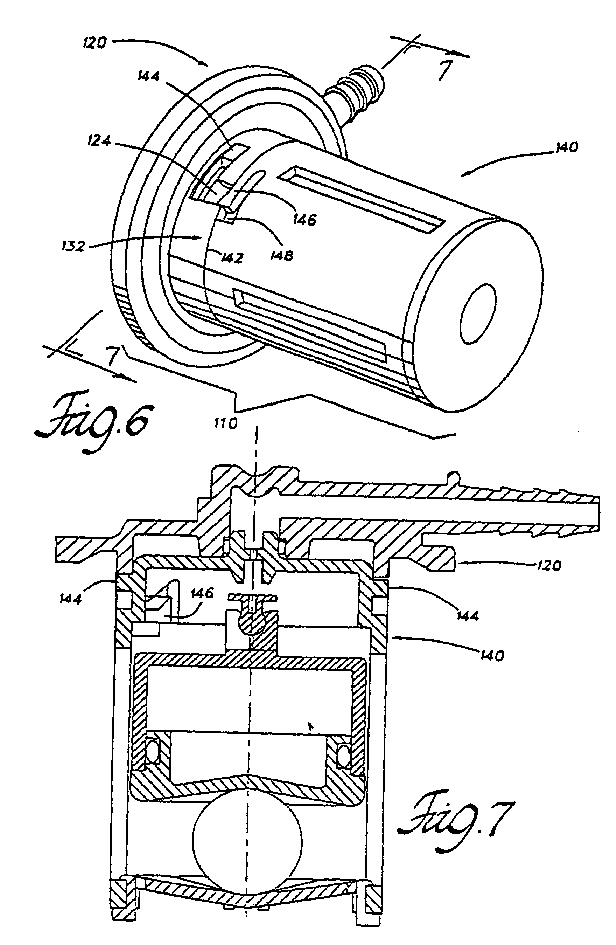

The valve member 140 as shown in Figures 6, 7 and 8 preferably includes two resilient locking elements 146 diametrically opposed from each other. In order to release the members from engagement, the resilient locking elements 146 must be manually depressed (see Figure 9) simultaneously into the adjoining recesses 148 as the fitting member 120 is twisted initially in the tangential plane, and subsequently withdrawn along the axial plane.

The retention means 114 and the resilient locking elements 146 combine to enable secure engagement between the valve member 140 and the cap member 120 radially, tangentially, and axially.

Relative radial movement between the cap and valve members 120 and 140 during engagement is prevented by making the fitting member 120 slightly larger circumferentially than the body member 140, so that the body member 140 nests comfortably within the fitting member 120.

Relative tangential movement between the cap and valve members 120 and 140 during engagement is prevented in that a face 147 of the resilient locking element 146 abuts the entry portion 125 of the key-way 124, preventing relative rotation in the counterclockwise direction. Engagement between the radial lug 144 and the end portion 126 of the key-way 124 prevents relative rotation between the members in the opposing clockwise direction.

Relative axial movement between the cap and valve members 120 and 140 during engagement is prevented in that the lug 144 in combination with the key-way 124, sandwich about a protruding extension of the cap member 120.

The opposing resilient locking element 146 operates as a safety to prevent inadvertent depression of the resilient locking element 146. In applications where a permanent attachment between the cap and valve members 120 and 140 is needed, more than two resilient locking elements 146 are recommended. The difficulty of releasing the cap and valve members 120 and 140 from engagement increases with the addition of each locking element 146. In applications where frequent disengagement is necessary, a single resilient locking element 146 may be preferred.

Figure 8 discloses the cap member 120 of Figure 6 being mounted onto the valve member 140. Initially, the cap member 120 is positioned relative to the valve member 140 along an axial plane as the radial lugs 144 are aligned with the key-ways 124.

As the radial lugs 144 slide into the key-ways 124, the resilient locking elements 146 are depressed inwardly towards the corresponding recesses 148 in the body member 140 until the radial lugs 144 reach a first stop in their respective key-ways 124.

The cap and valve members 120 and 140 are then rotated relative to each other until the radial lugs 144 reach the end portion 126 of their respective key-ways 124. The resilient locking elements 146 are relaxed as they enter the key-ways 124 and engagement occurs. The resilient locking elements 146 are relaxed during engagement.

Figure 9 discloses the cap member 120 of Figure 6 being released from the valve member 140.

The valve member 140 is initially in the engagement position relative to the cap member 120. To initiate release, all of the resilient locking elements 146 must be simultaneously depressed towards their respective recesses 148 and away from the radial lugs 144 until the faces 147 clear the entry portions 125 of the key-ways 124 as shown in phantom in figure 9. The cap member 120 is then twisted or rotated relative to the valve member 140, until the radial lug 144 encounters a radial stop against the key-way 124.

The cap member 120 is then withdrawn axially relative to the valve member 140 as the radial lugs 144 slide through the axial entry portion 125 of the key-ways 124, until the cap member 120 is released from the valve member 140.

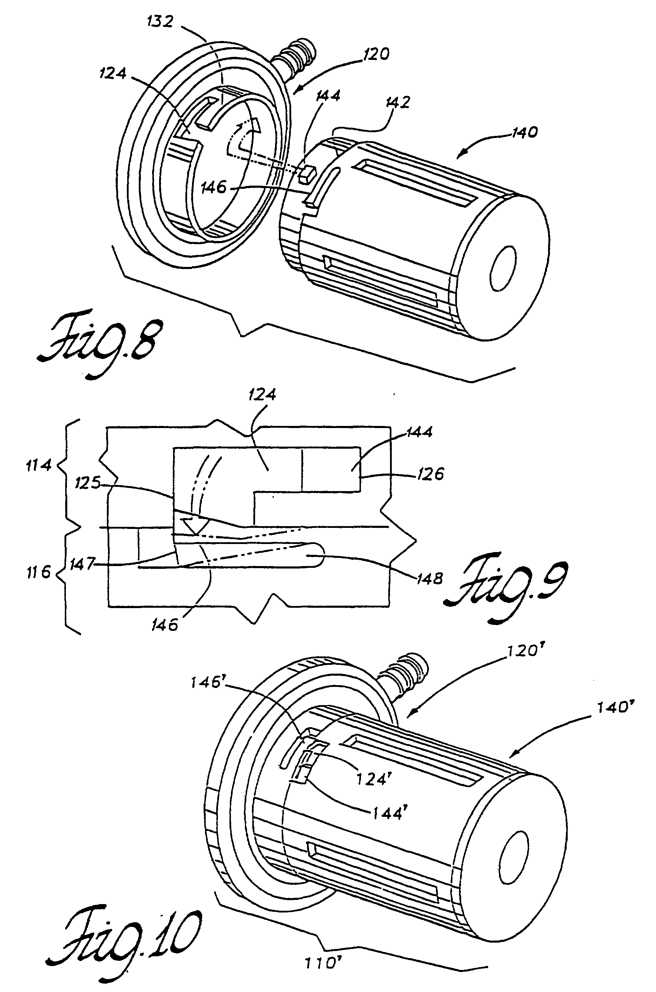

Figure 10 discloses a modification of the second preferred embodiment of the valve coupling mechanism 110 that is very similar. In the modified valve coupling, mechanism 110' the resilient locking elements 146' and the radial lugs 144' are disposed on the skirt of the cap member 120' and the corresponding key-ways 124' are disposed on the valve member 140.' The vent valve of figure 10 is otherwise the same as the vent valve of figures 6-9.

While the valve coupling mechanism of the invention has been illustrated in connection with a vent valve having a multi-piece housing, it should be understood that the invention is applicable to any valves having a multi-piece housing and in an even broader aspect to any coupling mechanism for connecting two members together.

## Claims

1. A coupling mechanism for acting upon two members (120, 140) in a radial, an axial, and a tangential plane, the first member (120) being cooperatively engageable upon the second member (140) and having a key-way (124) that has an axial portion with an open end and a circumferential portion which extends from the axial portion in a rotational direction to a closed end; the mechanism including a retention lug (144) and a resilient locking element (146) which are cooperatively engageable with the key-way (124), the retention lug (144) being engageable with the closed end of the key-way (124) and at least a portion of an end of the resilient locking element (146) being resiliently and selectively engageable with a wall portion of the open end of the key -way (124) to secure the first member (120) relative to the second member (140) along radial, axial, and tangential planes and to prevent rotation of the first member (120) relative to the second member (140) in either rotational direction, the retention lug (144) being formed on the second member (140); **characterized in that**
the resilient locking element (146, 146') formed as part of the second member (140) is formed as a finger extending in the opposite rotational direction, is bendable in the axial direction and operatively engageable in the open end of the axial portion of the key-way (124) so that the axial face of the said free end portion of the resilient locking finger prevents relative rotation of the two members (120, 140) in the opposite rotational direction, and **in that** the retention lug (144), after having passed the axial portion of the key-way (124), is operatively engageable with the closed end formed in the circumferential portion of the key-way (124), which circumferential portion extends from the axial portion of the key-way (124) in the rotational direction so as to prevent relative rotation of the two members in the rotational direction.

2. A coupling mechanism according to claim 1, wherein the first member has a plurality of key-ways (124, 124') that have axial portions and circumferential portions; the second member (140) has a plurality of lugs (144, 144') that are engageable with the respective closed ends of the plurality of key-ways, and the second member (140) has a plurality of bendable fingers (146, 146') that are operatively engageable in the respective open ends of the plurality of key-ways.

## Patentansprüche

1. Kupplungsmechanismus zur Einwirkung auf zwei Elemente (120, 140) in einer radialen, einer axialen und einer tangentialen Ebene, wobei das erste Element (120) mit dem zweiten Element (140) in Eingriff bringbar ist und eine Keilnut (124) besitzt, die einen axialen Abschnitt mit einem offenen Ende und einen Umfangsabschnitt, der sich vom axialen Abschnitt in Drehrichtung bis zu einem geschlossenen Ende erstreckt, aufweist, der Mechanismus einen Halteansatz (144) und ein elastisches Verriegelungselement (146) besitzt, die zusammenwirkend mit der Keilnut (124) in Eingriff bringbar sind, der Halteansatz (144) mit dem geschlossenen Ende der Keilnut (124) in Eingriff bringbar ist und mindestens ein Abschnitt eines Endes des elastischen Verriegelungselementes (146) elastisch und wahlweise mit einem Wandabschnitt des offenen Endes der Keilnut (124) in Eingriff bringbar ist, um das erste Element (120) relativ zum zweiten Element (140) entlang einer radialen, axialen und tangentialen Ebene zu befestigen und eine Drehung des ersten Elementes (120) relativ zum zweiten Element (140) in jeder Drehrichtung zu verhindern, wobei der Halteansatz (144) auf dem zweiten Element (140) ausgebildet ist,
**dadurch gekennzeichnet, daß**
das als Teil des zweiten Elementes (140) ausgebildete elastische Verriegelungselement (146, 146') als Finger geformt ist, der sich in der entgegengesetzten Drehrichtung erstreckt, in Axialrichtung biegbar ist und mit dem offenen Ende des axialen Abschnittes der Keilnut (124) in Eingriff bringbar ist, so daß die Axialfläche des freien Endabschnittes des elastischen Verriegelungsfingers eine Relativdrehung der beiden Elemente (120, 140) in der entgegengesetzten Drehrichtung verhindert, und daß der Halteansatz (144), nachdem er den axialen Abschnitt der Keilnut (124) passiert hat, mit dem im Umfangsabschnitt der Keilnut (124) ausgebildeten geschlossenen Ende in Eingriff bringbar ist, wobei sich der Umfangsabschnitt vom axialen Abschnitt der Keilnut (124) in Drehrichtung erstreckt, um eine Relativdrehung der beiden Elemente in Drehrichtung zu verhindern.

2. Kupplungsmechanismus nach Anspruch 1, bei dem das erste Element eine Vielzahl von Keilnuten (124, 124') besitzt, die axiale Abschnitte und Umfangsabschnitte aufweisen, das zweite Element (140) eine Vielzahl von Ansätzen (144, 144') aufweist, die mit den entsprechenden geschlossenen Enden der Vielzahl von Keilnuten in Eingriff bringbar sind, und das zweite Element (140) eine Vielzahl von biegbaren Fingern (146, 146') besitzt, die mit den entsprechenden offenen Enden der Vielzahl der Keilnuten in Eingriff bringbar sind.

## Revendications

1. Un mécanisme d'accouplement pour agir sur deux éléments (120, 140) dans un plan radial, un plan axial et un plan tangentiel, le premier élément (120) étant apte à enter co-fonctionnellement en prise sur le second élément (140) et ayant une rainure de clavette (124) qui comporte une partie axiale avec une extrémité ouverte et une partie en circonférence qui se prolonge de la partie axiale dans une direction de rotation jusqu'à une extrémité fermée ; le mécanisme comportant un ergot de retenue (144) et un élément de verrouillage résilient (146) qui sont aptes à entrer co-fonctionnellement en prise avec la rainure de clavette (124), l'ergot de retenue (144) pouvant être engagé à l'extrémité fermée de la rainure de clavette (124), et au moins une partie d'une extrémité de l'élément de verrouillage résilient (146) apte à entrer en prise, de façon élastique et sélective, avec une partie de paroi de l'extrémité ouverte de la rainure de clavette (124) afin de fixer solidement le premier élément (120) par rapport au second élément (140) suivant les plans radial, axial et tangentiel et empêcher la rotation du premier élément (120) par rapport au second élément (140) dans l'une quelconque des directions de rotation, l'ergot de retenue (144) étant formé sur le second membre (140) ; **caractérisé en ce que**
l'élément de verrouillage résilient (146, 146') formé en tant que pièce du second élément (140) est formé comme un doigt se prolongeant dans la direction de rotation opposée, est pliable dans le sens axial et apte à entrer fonctionnellement en prise avec l'extrémité ouverte de la partie axiale de la rainure de clavette (124) de sorte que la face axiale de ladite partie d'extrémité libre du doigt de verrouillage résilient empêche la rotation relative des deux éléments (120, 140) dans la direction de rotation opposée, et **en ce que**
l'ergot de retenue (144), après avoir dépassé la partie axiale de la rainure de clavette (124), est apte à entrer fonctionnellement en prise avec l'extrémité fermée formée dans la partie en circonférence de la rainure de clavette (124), laquelle partie en circonférence se prolonge de la partie axiale de la rainure de clavette (124) dans la direction de rotation de sorte à empêcher la rotation relative des deux éléments dans la direction de rotation.

2. Un mécanisme d'accouplement selon la revendication 1, dans lequel le premier élément comporte une pluralité de rainures de clavette (124, 124') qui ont des parties axiales et des parties en circonférence ; le second élément (140) a une pluralité d'ergots (144, 144') qui sont aptes à entrer en prise avec les extrémités fermées respectives de la pluralité de rainures de clavette, et le second élément (140) a une pluralité de doigts pliables (146, 146') qui sont aptes à entrer fonctionnellement en prise avec les extrémités ouvertes respectives de la pluralité de rainures de clavette.
